# EUROPEAN PATENT SPECIFICATION

(11) **EP 1 092 118 B1**
(45) Date of publication and mention of the grant of the patent: **26.07.2006**
(21) Application number: 00918184.3
(22) Date of filing: 20.03.2000
(51) Int. Cl.: F25D 23/12, B60H 1/32

(54) **TRANSPORT TEMPERATURE CONTROL UNIT**
TRANSPORTTEMPERATUREINHEIT
UNITE DE REGULATION DE TEMPERATURE DE TRANSPORT

(30) Priority: 28.04.1999 US 300997
(43) Date of publication of application: 18.04.2001
(73) Proprietor: THERMO KING CORPORATION, Minneapolis Minnesota 55420 (US)
(72) Inventor: BONGAARDS, Donald, J., Seminole, Florida 33777 (US)
(74) Representative: Holmes, Matthew Peter
(86) International application number: PCT/US2000/007430
(87) International publication number: WO 2000/065288

(56) References cited:
- EP-A- 0 058 821
- EP-A- 0 827 855
- EP-A- 0 962 343
- EP-A- 1 022 527
- US-A- 3 712 078
- US-A- 3 871 188
- US-A- 4 109 485
- US-A- 4 736 597

## Description

The invention relates to a transport temperature control unit for maintaining a conditioned space at a predetermined temperature, and more particularly the invention relates to a transport temperature control unit mounted on the exterior of a conditioned space where the transport temperature control unit has condenser and evaporator assemblies that are oriented back-to-back to permit the assemblies to be located outside the conditioned space.

Transport temperature control units are used to maintain a desired temperature in a closed conditioned space such as in a trailer, truck or container for example. Conventional transport temperature control units generally include a refrigerant compressor, condenser, evaporator, and valve means for controlling the supply of refrigerant to the evaporator. In typical temperature control unit installations, limited space is available for locating conventional temperature control units along the exterior of the conditioned space. Space is limited due primarily to clearance required for tilt cab trucks. Therefore, it is necessary to minimize the size of transport temperature control units in order to ensure that they will fit within the space provided on the trailer, truck or container. It is difficult to design a large capacity temperature control unit that fits within the limited designated space and also produces the desired airflow with the requisite cooling and heating capacity.

Due to the space limitations in vehicles that include temperature control units, the evaporator unit is located in the conditioned space and the remaining components of the temperature control unit are enclosed by a housing and mounted on the exterior of the conditioned space. There are a number of reasons why it is undesirable to locate the evaporator unit in the conditioned space. An evaporator located in the conditioned space occupies conditioned space that could be used to carry cargo. Additionally, forklifts or other heavy machinery used to move the cargo into and out of the conditioned space frequently come into contact with the evaporator unit and as a result, damage the evaporator.

EP O 058821 A discloses a vehicle according to the preamble of claim 1. EP 1 022 527 A which has been published after the priority date of the present application discloses a vehicle with a nosemount temperature control unit comprising an evaporator assembly located in the conditioned space.

The foregoing illustrates limitations known to exist in present devices and methods. Thus, it is apparent that it would be advantageous to provide an alternative directed to overcoming one or more of the limitations set forth above. Accordingly, a suitable alternative is provided including features more fully disclosed hereinafter.

### SUMMARY OF THE INVENTION

According to the present invention, this is accomplished by providing, a vehicle according to claim 1 which comprises a transport temperature control unit including a condenser assembly and an evaporator assembly with the condenser and evaporator assemblies located outside the conditioned space. The transport temperature control unit of the present invention is more compact than conventional units and fits within the limited space provided along the exterior of the conditioned space. Additionally, because the evaporator is located outside the conditioned space, the evaporator unit is less likely to be damaged during cargo loading and unloading.

In the present invention, the evaporator electric motor driven backward inclined impellers are located above the evaporator coils. The warmer conditioned space is drawn into the evaporator by evaporator blowers. At first the air is drawn vertically upward through the evaporator coil, and then is discharged substantially horizontally into the air conditioned space by the blowers. The unique use of small vertically oriented motor driven blowers in the evaporator module permits the most efficient space utilization of any competing designs in the market today, except for one instance where the use of a horizontally mounted crossflow blower is utilized, this approach looses airflow very rapidly as frost builds up on the coil.

Adjacent impellers are separated from the outside ambient conditions by an insulated scalloped divider. A further evolution of the concept would be to provide an additional insulation barrier between the impellers to provide for use in a multi-lane/multi-temperature application.

The present modular unit can be scaled to smaller or larger capacity units by decreasing or increasing the height or thickness dimension of the condenser and evaporator coils while keeping all other dimensions the same on each unit.

The proposed evaporator design also provides high velocity, centrally located top air discharge along substantially the entire truck width, which is ideal for achieving effective air circulation around the entire load.

Part of the compact, efficient space utilization in the present invention is derived from the use of a high efficiency coil, for example 7 mm diameter, closely spaced tubes. The condenser uses a modine style coil which is also more space efficient than conventional coils. It is because of the efficient coil space utilization and positioning of air moving components that the evaporator module and condenser modules can be located back to back, while permitting the requisite tilt cab clearance.

The foregoing and other aspects will become apparent from the following detailed description of the invention when considered in conjunction with the accompanying drawing figures.

### DESCRIPTION OF THE DRAWING FIGURES

Figure 1 is a perspective view showing the temperature control unit of the present invention mounted for use on a truck;
Figure 2 is a lateral cross-section view of the back-to-back evaporator and condenser assemblies;
Figure 3 is an enlarged lateral cross-section view of the evaporator of Figure 2;
Figure 4 is a front perspective view of the temperature control unit of Figure 1 with the temperature control unit cover removed;
Figure 5 is a rear perspective view of the temperature control unit of Figure 4;
Figure 6 is a perspective view of the back-to-back condenser module frame and evaporator module frame;
Figure 7 is a schematic representation of a top plan view of the temperature control unit of Figure 1; and
Figure 8 is an elevational view of the rear of the transport temperature control unit of Figure 1.

### DESCRIPTION OF THE PREFERRED EMBODIMENT OF THE INVENTION

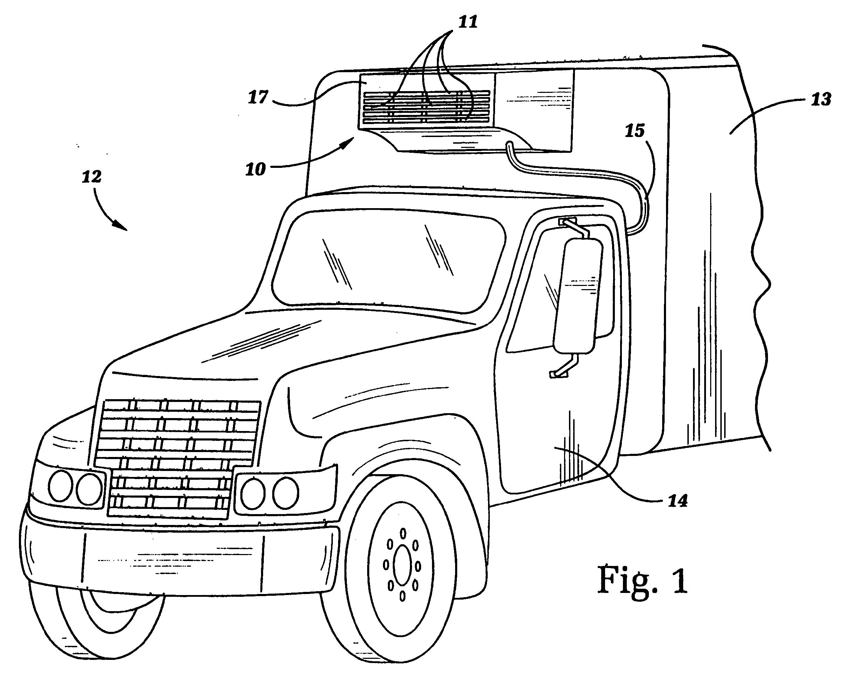

Turning now to the drawings wherein like parts are referred to by the same number throughout the several views, and particularly Figure 1, temperature control unit 10 of the present invention is conventionally mounted along the exterior of conditioned space 13 of vehicle 12. As illustrated in Figure 1, vehicle 12 is a truck, and temperature control unit 10 is a nosemount unit mounted on the vehicle conditioned space 13 above the operator's compartment or cab 14. In Figure 1, a portion of the conditioned space 13 is partially broken away, however it should be understood that for purposes of this disclosure, the term "conditioned space" shall mean any closed volume maintained at a constant temperature by unit 10. In addition to space 13 of truck 12, the conditioned space may be a container or the trailer portion of a tractor trailer. All of the system components are located outside conditioned space 13. Unit 10 of the present invention is sufficiently compact to permit the cab 14 to be tilted past the unit 10 when access to the truck engine is required.

Electrical power is provided to unit 10 by the truck engine (not shown) through cable 15 which electrically connects the unit 10 to an alternator mounted on the truck engine.

Unit cover 17 encloses the condenser assembly components. Ambient air is drawn through cover 17 and across the condenser through grille openings 11 provided in the cover.

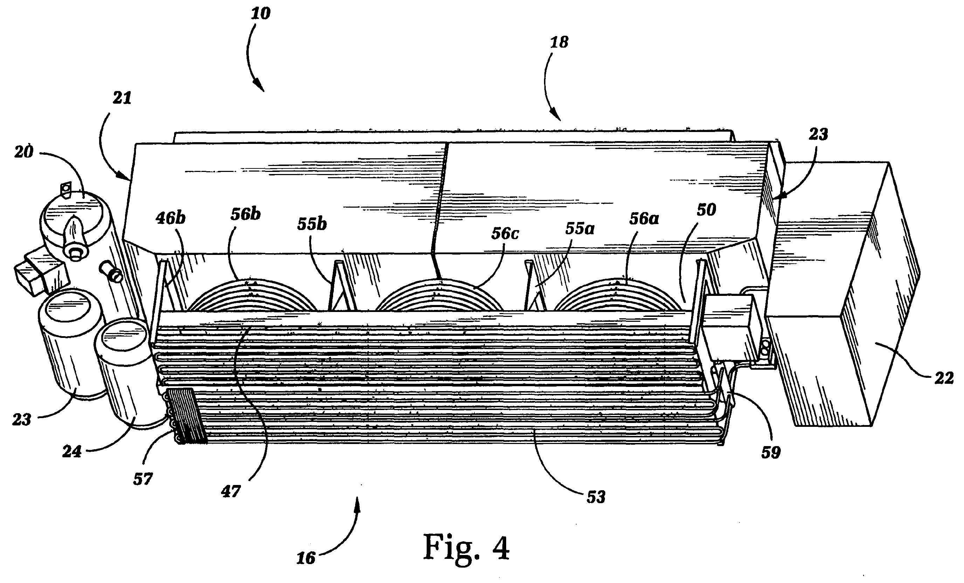

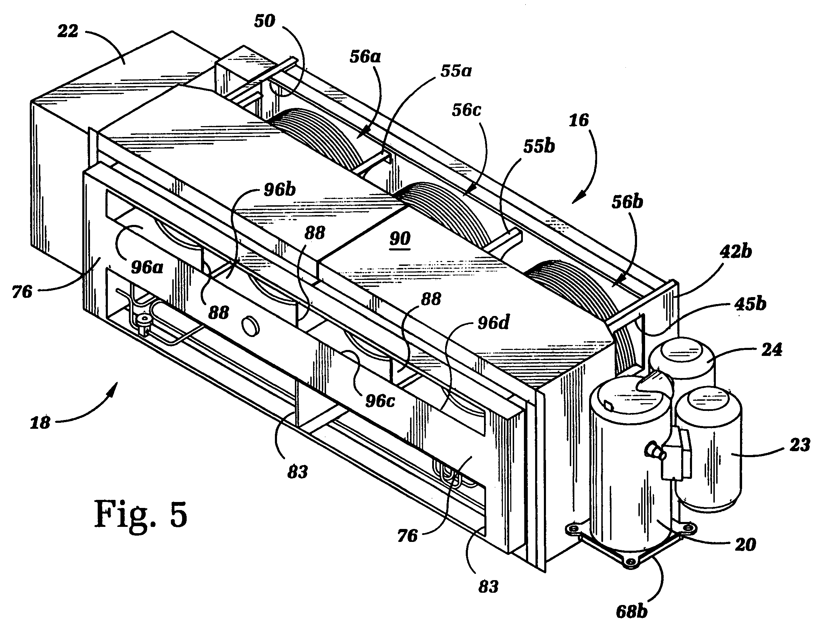

Turning to Figure 4, unit 10 is comprised generally of condenser assembly 16, evaporator assembly 18, compressor 20, and microprocessor based controller 22. The condenser and evaporator assemblies are located back-to-back with the condenser assembly 16 removably connected to the evaporator assembly 18. The back-to-back orientation of assemblies 16 and 18 define lateral sides 21 and 23. As shown in Figures 4 and 5, compressor 20 is located adjacent lateral side 21 and controller unit 22 is located adjacent lateral side 23. Compressor 20 is any suitable conventional compressor but it is preferred that compressor 20 be a conventional hermetically sealed scroll compressor.

Conventional accumulator and receiver tanks 23, 24 are located adjacent lateral side 21. Accumulator tank 23 is attached directly to the compressor housing. The conventional receiver tank is flow connected to the condenser coil discharge port and to the evaporator heat exchanger 74. The conventional accumulator tank 23 is flow connected to the heat exchanger 74 and the compressor suction port. The receiver and accumulator tanks are flow connected to the other unit components by conventional conduits.

Unit controller 22 is located adjacent lateral side 23. The controller 22 receives electric power from the electrical system of the truck engine (e.g. an alternator) via cable 15 to drive the electrically actuated unit components such as the condenser and evaporator fan and impeller motors which will be described in greater detail hereinbelow. Because the controller and compressor are of conventional design well known to one skilled in the art further description of these components is not required.

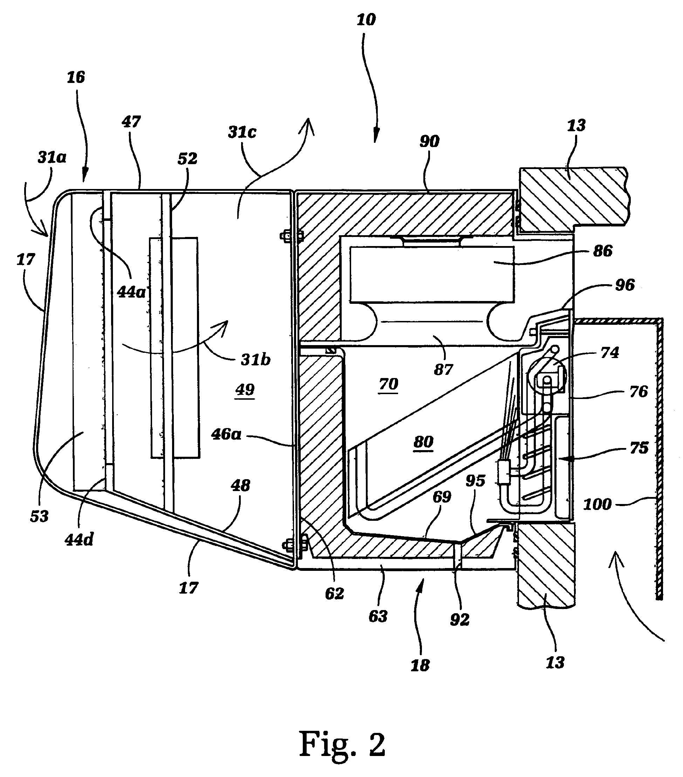

Now turning to Figures 2, 4, and 6, condenser assembly 16 is supported by a standalone condenser frame 40 with front side 41 and rear side 43. Lateral frame sides 42a, 42b and longitudinally extending top and bottom panels 47 and 48 define a condenser flow chamber 49. Top frame panel 47 includes outlet 50 for flowing the ambient air drawn into the condenser assembly 16 out of the condenser assembly and out of the top, bottom and sides of the unit 10. Sides 42a and 42b include access openings 45a, 45b and inwardly directed flanges 46a, 46b that extend between the top and bottom of frame 40. The openings 45a,b permit an operator or technician to gain access to the chamber 49 to service the unit components and plumbing. Frame 40 is removably connected to evaporator frame 60 at flanges 46a, 46b by conventional fasteners. Flanges 44a, 44b, 44c, and 44d are provided along the front 41 of the frame 40.

Longitudinally extending condenser fan support panel 52 divides chamber 49 into front and rear chambers. See Figure 2.

Condenser fan support panel 52 extends longitudinally between the sides 42a and 42b downstream from the front of the frame 44 and the panel 52 includes openings 54a, 54b, and 54c which are each adapted to receive a condenser fan unit 56a, 56b, and 56c respectively. Ambient air drawn into the condenser assembly can only pass through the condenser assembly by the fan openings 54a-c.

As shown in Figure 4, laterally extending partition 55a separates adjacent condenser fans 56a and 56c and partition 55b separates adjacent condenser fans 56b and 56c. The partitions join the exterior of evaporator frame front panel 62 and the interior of the condenser fan support panel 52 between adjacent fan openings.

The condenser coil 53 is attached to frame 40 at flanges 44a-d by conventional means, and in this way is located upstream from the fans 56a, 56b, and 56c. The condenser coil is a modine type well known to one skilled in the art. The thickness of the modine type coil is significantly less than the thickness of other condenser coils and therefore helps produce the compact efficient unit design of the present invention.

Condenser fans 56a-c draw ambient air through the openings 11, across coil 53, into chamber 49 and out opening 50 in the direction of arrows 31a-c. The ambient air serves to cool and liquefy the hot compressed refrigerant gas flowed from compressor 20 to the condenser coil.

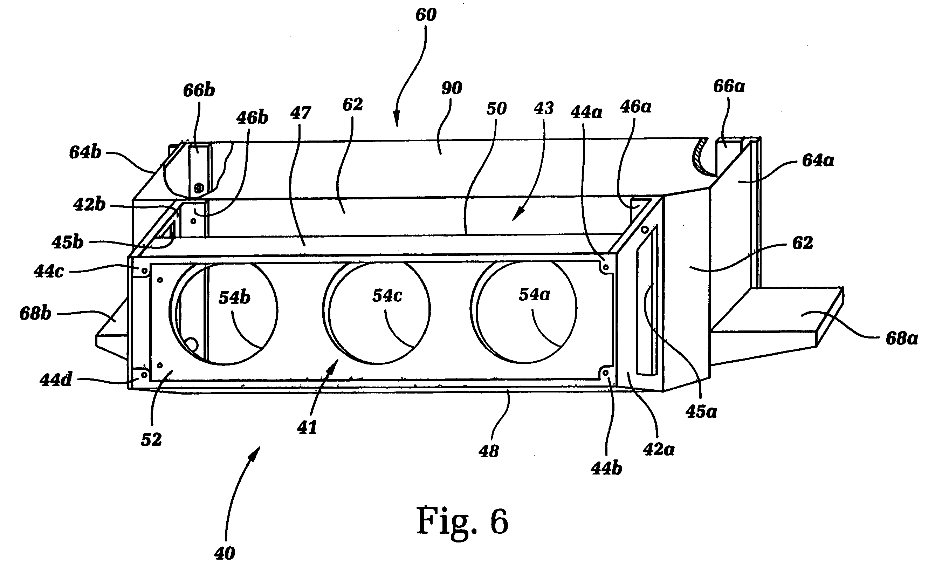

Evaporator assembly 18 is supported by standalone frame 60. As shown in Figures 2 and 6, the condenser frame 40 is removably attached to frame 60. In this way, the condenser and evaporator assemblies are oriented back-to-back and are aligned. Condenser frame 40 is attached to the front evaporator frame wall 62 at the rear flanges 46a and 46b. The evaporator frame 62 wall serves to close the rear side 43 of the condenser frame. By attaching the condenser assembly directly to the evaporator assembly and aligning the condenser assembly with the evaporator assembly, the unit 10 is more compact than conventional equivalent capacity temperature control units.

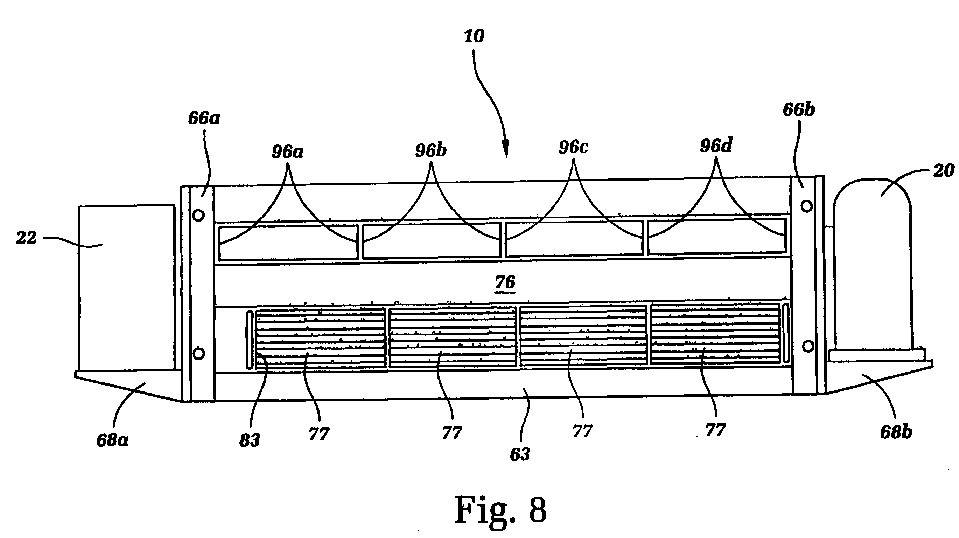

Evaporator frame 60 has a front side 33 and a rear side 35 and also includes front panel 62, bottom panel 63 that is made integral with front panel 62 by a bolt connection, and lateral side panels 64a and 64b with rear inwardly turned flanges 66a and 66b. Outwardly extending rigid platforms 68a and 68b are fixed to respective frame lateral sides 64a and 64b. The rigid platforms may be fixed to the sides 64a and 64b by a weld or other suitable means. As shown in Figure 8, platform member 68a is adapted to support a controller housing 22 for unit 10, and platform 68b is adapted to support compressor 20.

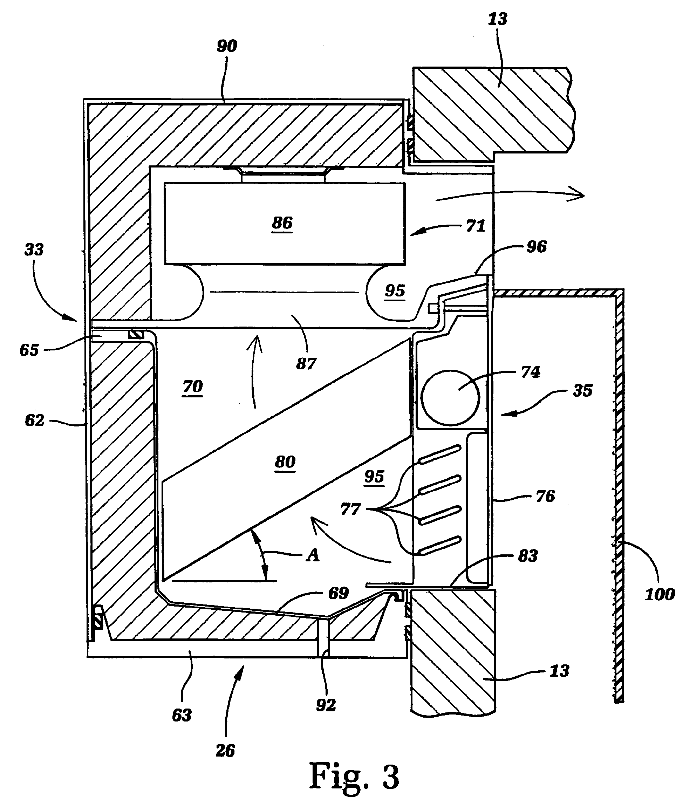

Turning now to Figures 2 and 3, evaporator assembly 18, includes longitudinally extending tray 69 with a substantially L-shaped cross section located in the evaporator interior 70 defined by the evaporator frame 60. The rear longitudinal edge of the tray is inserted into a mating groove in bottom panel 63 to maintain the tray stationary in interior 70. The front portion of the tray terminates in a substantially horizontal longitudinal flange 65. A condensate drain 92 is provided in tray 69, as shown in Figures 2 and 3.

Inlet wall 76 defines a series of longitudinally aligned evaporator discharge openings 96 and inlets 83 with grilles 77 that direct air from the conditioned space into the interior 70 of the evaporator.

Heat exchanger 74 is located behind wall 76 and is flow connected to the receiver tank 24 and to distributor 75 which delivers refrigerant or another heat exchanging medium to the evaporator coil 80 which is circuited to accommodate any air maldistribution. The evaporator coil extends between the tray 69 and the heat exchanger 74 and is oriented at an angle identified as A in Figure 3. It is preferred that the evaporator coil has a diameter of approximately 7mm. The small diameter promotes the compact unit design of the present invention.

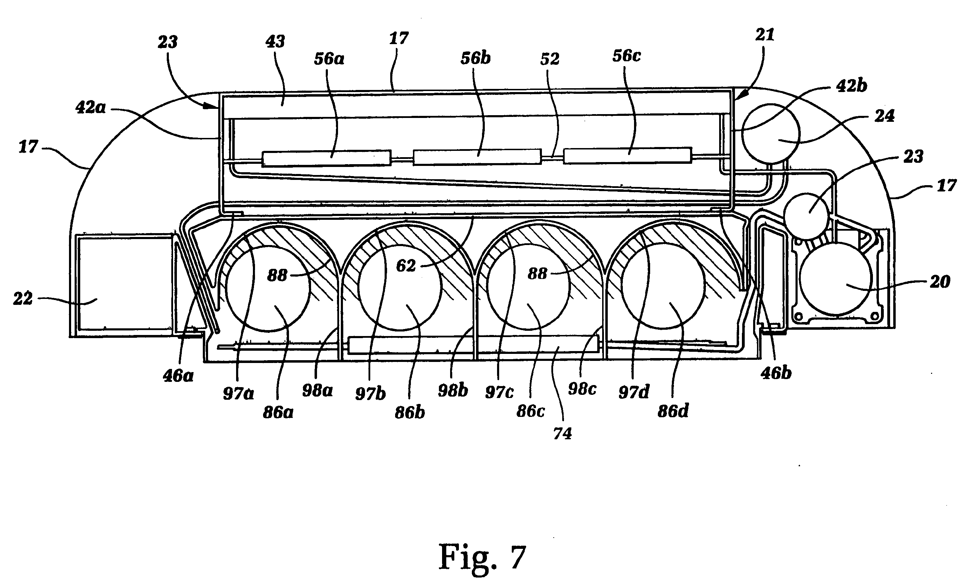

A bank of evaporator impellers 71 is seated on base 87 above the evaporator coils 80. For purposes of describing the preferred embodiment of the invention the bank of evaporator impellers includes four impellers 86a, 86b, 86c, and 86d which are arranged side-by-side along the longitudinal length of the bank. See Figure 7.

An insulated, scalloped shroud 88 is seated on base 87. The shroud includes four arcuate portions 97a, 97b, 97c, and 97d that encircle a respective impeller motor with adjacent arcuate portions joined by a common divider wall 98a, 98b, and 98c. The shroud 88 in combination with base 87 and top wall 90 form discrete discharge channels 96a, 96b, 96c, and 96d. The discrete discharge channels permit the possibility of unit 10 to be used in conjunction with a conditioned space having multiple lanes or conditioned spaces to be maintained at different temperatures. In such a use, conditioned space return air can be supplied to each lane at a different temperature through the discrete evaporator discharge channels. The shroud may be made from plastic or metal. The top wall 90 is located above blowers 86a-8 and the shroud 88.

The tray 69, wall 76, base 87, shroud 88, and top wall 90 define a C-shaped evaporator air flow path 95. The evaporator impellers and evaporator coil are located in the C-shaped air flow path. During operation of unit 10, air in the conditioned space is drawn through bulkhead 100 and into the evaporator through inlet 83 by the blower motors. The conditioned space air is drawn into the evaporator flow path substantially horizontally. The impellers 86a-d draw the conditioned space air through the evaporator coil 80 and upward past impellers 86a-d. The air is then evenly discharged substantially horizontally back into the conditioned space through discharge openings 96a-d.

Another shortcoming associated with conventional temperature control units is the evaporators do not evenly distribute air through the conditioned space. As a result, all of the cargo may not be maintained at the predetermined temperature required to preserve the cargo quality. Conventional temperature control units have evaporators with crossflow impellers that are aligned with the evaporator coils to draw air across the coils. Such conventional impellers have a characteristic which produces rapid airflow losses as frost builds up on the coils. The impellers are frequently located either at each lateral end of the evaporator coils or are mounted in front or behind the evaporator coils along the respective inlet side or discharge side of the coils. Orienting the impellers in this way requires that the unit be larger to provide more space for airflow to compensate for the poor airflow distribution and still realize the desired temperature control capacity. The stronger air flow characteristics of the unit's evaporator impellers eliminates many of the problems associated with conventional mobile temperature control units and also helps to produce the compact design of the present invention.

While I have illustrated and described a preferred embodiment of our invention, it is understood that this is capable of modification, and I therefore do not wish to be limited to the precise details set forth, but desire to avail myself of such changes and alterations as fall within the purview of the following claims.

## Claims

1. A vehicle comprising:
a truck (12) powered by an engine including an electrical system;
a cargo enclosure, defining an interior conditioned space (13);
a transport temperature control unit (10) for maintaining the conditioned space (13) at a desired temperature;
the transport temperature control unit fixedly mounted to a front end of the cargo enclosure and comprising an electrically-powered compressor (20), condenser assembly (16) and evaporator assembly (18);
the compressor (20), condenser assembly (16) and evaporator assembly (18) being flow connected and located outside the conditioned space (13);
the evaporator assembly (18) being supported by an evaporator frame (60) and the condenser assembly (16) being supported by a condenser frame (40) connected to the evaporator frame; **characterised in that**
in use, power is supplied to the temperature control unit (10) from said engine electrical system, and
the transport temperature control unit (10) is a nosemount unit mounted above the operator's compartement or cab (14).

2. A vehicle according to claim 1, wherein said electrical power is suppled from an alternator of the vehicle electrical system.

3. A vehicle according to claim 1 or claim 2, wherein the condenser assembly (16) includes a plurality of electrically-powered fans (56a,56b,56c).

4. A vehicle according to any preceding claim, wherein the evaporator assembly (18) includes a plurality of electrically-powered impellers (86a,86b,86c,86d).

5. A vehicle according to any preceding claim, comprising a tilt-cab (14), wherein the transport temperature control unit (10) is sufficiently compact to permit the cab (14) to be tilted past the unit (10).

6. A vehicle according to any preceding claim, wherein condenser frame (40) is removably connected to the evaporator frame. (60)

7. A vehicle according to any preceding claim, wherein the evaporator assembly (18) defines a C-shaped evaporator air flowpath.

8. A vehicle according to any preceding claim, wherein the evaporator assembly (18) includes evaporator coils (80) located in the evaporator flowpath and includes means (86a,86b,86c,86d) for drawing conditioned space air into the evaporator flowpath, said means (86a,86b,86c,86d) being located in the air flowpath above the evaporator coils (80).

9. A vehicle according to claim 8, wherein the means for drawing conditioned space air into the flowpath is comprised of a plurality of electric impellers (86a,86b,86c,96d).

10. A vehicle according to claim 7 or claim 8, wherein the means (86a,96b,86c,36d) for drawing the conditioned space air into the evaporator flowpath is enclosed by a shroud (88).

11. A vehicle according to claim 10, wherein the shroud (88) is comprised of arcuate portions joined by non-arcuate portions.

12. A vehicle according to any preceding claim, wherein the condenser assembly (16) and evaporator assembly (18) are located back-to-back

13. A vehicle according to any preceding claim, wherein the evaporator and condenser assemblies (16, 18) are aligned.

## Patentansprüche

1. Fahrzeug, aufweisend:
ein Lastfahrzeug (12), angetrieben mit Hilfe eines Motors unter Einbeziehung eines elektrischen Systems;
ein Ladungsgehäuse, welches einen inneren klimatisierten Raum (13) begrenzt;
eine Transporttemperatur-Steuereinheit (10), um den klimatisierten Raum (13) bei einer gewünschten Temperatur zu halten;
wobei die Transporttempexatur-Steuereinbeit (10) an einer Vorderseite des Ladungsgebäuses feststehend aufgebaut ist und einen elektrisch betriebenen Kompressor (20), eine Kühlbaugruppe (16) und eine Verdampferbaugruppe (18) aufweist;
wobei der Kompressor (20), die Kühlbaugruppe (16) und die Verdampferbaugruppe (18) durchflussverbunden sind und sich außerhalb des klimatisierten Raumes (13) befinden;
wobei die Verdampferbaugruppe (18) von einem verdainpferrahrnen (60) getragen wird und die Kühlbaugruppe (16) von einem Kühlrahmen (40) getragen wird, der mit dem Verdampferrahmen (60) verbunden ist;
**dadurch gekennzeichnet, dass** im Betrieb Energie von dem elektrischen System des Motors an die Temperatur-Steuereinheit (10) zugeführt wird, und
die Transporttemperatur-Steuereinheit (10) eine spindelmontierte Einheit ist, die oberhalb des Fahrerhauses oder der Fahrerkabine (14) aufgebaut ist.

2. Fahrzeug nach Anspruch 1, wobei die elektrische Energie von einem Wechselstromerzeuger des elektrischen Systems des Fahrzeugs zugeführt wird.

3. Fahrzeug nach Anspruch 1 oder 2, wobei in die Kühlbaugruppe (16) eine Mehrzahl von elektrisch betriebenen Lüftern (56a, 56b, 56c) einbezogen ist.

4. Fahrzeug nach einem der vorgenannten Ansprüche, wobei, in die Verdampferbaugruppe (18) eine Mehrzahl von elektrisch betriebenen Lüfterrädern (86a, 86b, 86c, 86d) einbezogen ist.

5. Fahrzeug nach einem der vorgenannten Ansprüche, umfassend ein kippbares Fahrerhaus (14), wobei die Transporttemperatur-Steuereinheit (10) ausreichend kompakt ist, um zu ermöglichen, dass das Fahrerhaus (14) an der Einheit entlang (10) gekippt werden kann.

6. Fahrzeug nach einem der vorgenannten Ansprüche, wobei der Kühlerrahmen (40) mit dem Verdampferrahmen (60) abnehmbar verbunden ist.

7. Fahrzeug nach einem der vorgenannten Ansprüche, wobei die Verdampferbaugruppe (18) einen C-förmigen Luftstromweg des Verdampfers festlegt.

8. Fahrzeug nach einem der vorgenannten Ansprüche, wobei in die Verdampferbaugruppe (18) Verdampferspulen (80) einbezogen sind, die sich im Luftstromweg des Verdampfers befinden, und Mittel (86a, 86b, 86c, 86d) einbezogen sind, um die Luft aus dem klimatisierten Raum in den Luftstromweg des Verdampfers zu ziehen, wobei sich die Mittel (86a, 86b, 86c, 86d) im Luftstromweg oberhalb der Verdampferspulen (80) befinden.

9. Fahrzeug nach Anspruch 8, wobei die Mittel, um die Luft aus dem klimatisierten Raum in den Luftstromweg zu ziehen, eine Mehrzahl elektrisch betriebener Lüfterräder (86a, 86b, 86c, 86d) aufweisen.

10. Fahrzeug nach Anspruch 7 oder 8, wobei die Mittel (86a, 86b, 86c, 86d), um die Luft aus dem klimatisierten Raum in den Stromweg des Verdampfers zu ziehen, von einer Umhüllung (88) eingeschlossen sind.

11. Fahrzeug nach Anspruch 10, wobei die Umhüllung (88) gekrümmte Abschnitte aufweist, die über nicht gekrümmte Abschnitte verbunden sind.

12. Fahrzeug nach einem der vorgenannten Ansprüche, wobei die Kühlbaugruppe (16) und die Verdampferguppe (18) Rücken an Rücken angeordnet sind.

13. Fahrzeug nach einem der vorgenannten Ansprüche, wobei die Verdampfer- und Kühlbaugruppen (16,18) ausgerichtet sind.

## Revendications

1. Véhicule, comprenant :
un camion (12) entraîné par un moteur englobant un système électrique;
une enceinte de cargaison définissant un espace climatisé interne (13) ;
une unité de commande de la température de transport (10) pour maintenir l'espace climatisé (13) à une température voulue ;
l'unité de commande de la température de transport étant montée fermement sur une extrémité avant de l'enceinte de cargaison et comprenant un compresseur (20), un assemblage de condenseur (16) et un assemblage d'évaporateur (18) à actionnement électrique;
le compresseur (20), l'assemblage de condenseur (16) et l'assemblage d'évaporateur (18) étant connectés par écoulement et agencés à l'extérieur de l'espace climatisé (13) ;
l'assemblage d'évaporateur (18) étant supporté par un cadre d'évaporateur (60) et l'assemblage de condenseur (16) étant supporté par un cadre de condenseur (40) connecté au cadre d'évaporateur ; **caractérisé en ce qu'**en service, l'énergie est amenée vers l'unité de commande de la température (10) par ledit système électrique du moteur ; et
l'unité de commande de la température de transport (10) est constituée par une unité à montage avant, montée au-dessus du compartiment de l'opérateur ou de la cabine (14).

2. Véhicule selon la revendication 1, dans lequel ladite énergie électrique est amenée par un alternateur du système électrique du véhicule.

3. Véhicule selon les revendications 1 ou 2, dans lequel l'assemblage de condenseur (16) englobe plusieurs ventilateurs à actionnement électrique (56a, 56b, 56c).

4. Véhicule selon l'une quelconque des revendications précédentes, dans lequel l'assemblage d'évaporateur (18) englobe plusieurs roues à actionnement électrique (86a, 86b, 86c, 86d).

5. Véhicule selon l'une quelconque des revendications précédentes, comprenant une cabine basculante (14), l'unité de commande de la température de transport (10) étant suffisamment compacte pour permettre le basculement de la cabine (14) le long de l'imité (10).

6. Véhicule selon l'une quelconque des revendications précédentes, dans lequel le cadre de condenseur (40) est connecté de manière amovible sur le cadre d'évaporateur (60).

7. Véhicule selon l'une quelconque des revendications précédentes, dans lequel l'assemblage d'évaporateur (18) définit une trajectoire d'écoulement de l'air de l'évaporateur en forme de C.

8. Véhicule selon l'une quelconque des revendications précédentes, dans lequel l'assemblage d'évaporateur (18) englobe des bobines d'évaporateur (80) agencés dans la trajectoire d'écoulement de l'évaporateur et englobe des moyens (86a, 86b, 86c, 86d) pour aspirer l'air de l'espace climatisé dans la trajectoire d'écoulement de l'évaporateur, lesdits moyens (86a, 86b, 86c, 86d) étant agencés dans la trajectoire d'écoulement d'air au-dessus des bobines de l'évaporateur (80).

9. Véhicule selon la revendication 8, dans lequel les moyens destinés à aspirer l'air de l'espace climatisé dans la trajectoire d'écoulement sont constitués par plusieurs roues électriques (86a, 86b, 86c, 86d).

10. Véhicule selon les revendications 7 ou 8, dans lequel les moyens (86a, 86b, 86c, 86d) destinés à aspirer l'air de l'espace climatisé dans la trajectoire d'écoulement sont renfermés par une enveloppe (88).

11. Véhicule selon la revendication 10, dans lequel l'enveloppe (88) comprend des parties arquées reliées par des parties non arquées.

12. Véhicule selon l'une quelconque des revendications précédentes, dans lequel l'assemblage de condenseur (16) et l'assemblage d'évaporateur (18) sont agencés dos à dos.

13. Véhicule selon l'une quelconque des revendications précédentes, dans lequel les assemblages d'évaporateur et de condenseur (16, 18) sont alignés
